(19) Europäisches Patentamt / European Patent Office / Office européen des brevets

(11) **EP 3 953 113 B1**

(12) **EUROPÄISCHE PATENTSCHRIFT**

(45) Veröffentlichungstag und Bekanntmachung des Hinweises auf die Patenterteilung:
**26.04.2023 Patentblatt 2023/17**

(21) Anmeldenummer: **20726718.8**

(22) Anmeldetag: **07.05.2020**

(51) Internationale Patentklassifikation (IPC):
**B25J 9/16** *(2006.01)* **B25J 11/00** *(2006.01)*
**B25J 19/02** *(2006.01)* **B05B 13/04** *(2006.01)*

(52) Gemeinsame Patentklassifikation (CPC):
**B05B 13/0452; B25J 9/1664; B25J 9/1697; B25J 11/0075;** G05B 2219/37563; G05B 2219/37572; G05B 2219/45013; G05B 2219/45065

(86) Internationale Anmeldenummer:
**PCT/EP2020/062674**

(87) Internationale Veröffentlichungsnummer:
**WO 2020/225350 (12.11.2020 Gazette 2020/46)**

(54) **BESCHICHTUNGSVERFAHREN UND ENTSPRECHENDE BESCHICHTUNGSANLAGE**

COATING METHOD AND CORRESPONDING COATING INSTALLATION

PROCÉDÉ DE REVÊTEMENT ET SYSTÈME DE REVÊTEMENT CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.05.2019 DE 102019111760**

(43) Veröffentlichungstag der Anmeldung:
**16.02.2022 Patentblatt 2022/07**

(73) Patentinhaber: **Dürr Systems AG**
**74321 Bietigheim-Bissingen (DE)**

(72) Erfinder:
• **KUNZ, Harald**
**76646 Bruchsal (DE)**
• **BAUDER, Manfred**
**70192 Stuttgart (DE)**
• **SPILLER, Alexander**
**70825 Korntal-Münchingen (DE)**

(74) Vertreter: **v. Bezold & Partner Patentanwälte - PartG mbB**
**Ridlerstraße 57**
**80339 München (DE)**

(56) Entgegenhaltungen:
**EP-A2- 1 184 139   WO-A1-2014/090323**
**CN-A- 108 297 097   US-A1- 2015 328 773**

## Beschreibung

Die Erfindung betrifft ein Beschichtungsverfahren zur Beschichtung eines Bauteils (z.B. Kraftfahrzeugkarosseriebauteil) mit einem Beschichtungsmittel (z.B. Lack). Weiterhin betrifft die Erfindung eine entsprechende Beschichtungsanlage.

In modernen Lackieranlagen zur Lackierung von Kraftfahrzeugkarosseriebauteilen werden als Applikationsgeräte üblicherweise Rotationszerstäuber eingesetzt, die von einem mehrachsigen Lackierroboter mit einer seriellen Roboterkinematik entlang vorgegebener Beschichtungsbahnen über die Bauteiloberfläche der zu lackierenden Kraftfahrzeugkarosseriebauteile geführt werden. Die zu lackierenden Kraftfahrzeugkarosseriebauteile werden hierbei üblicherweise von einem Linearförderer entlang einer Lackierstraße durch die Lackieranlage gefördert, wobei der Linearförderer Positionierungstoleranzen aufweist. Darüber hinaus hat auch der mehrachsige Lackierroboter Positionierungstoleranzen. Schließlich weisen auch die zu lackierenden Kraftfahrzeugkarosseriebauteile Formtoleranzen auf. Im Ergebnis können diese Positionierungstoleranzen zu einer Fehlpositionierung des Rotationszerstäubers relativ zu dem zu lackierenden Kraftfahrzeugkarosseriebauteil führen.

Zur Lösung dieses Problems sind aus dem Stand der Technik verschiedene Konzepte bekannt, die jedoch alle mit spezifischen Nachteilen verbunden sind.

Ein bekanntes Konzept sieht vor, dass die zu lackierenden Kraftfahrzeugkarosseriebauteile vor der Lackierung durch ein Lageerkennungssystem vermessen werden, wobei das Lageerkennungssystem beispielsweise mit vier Kameras arbeiten kann. In Abhängigkeit von der gemessenen Position, Ausrichtung und Form des zu lackierenden Kraftfahrzeugkarosseriebauteils können dann die vorgegebenen programmierten Beschichtungsbahnen entsprechend angepasst werden.

Ein anderes bekanntes Konzept sieht dagegen vor, die zu lackierenden Kraftfahrzeugkarosseriebauteile mit mobilen, robotergeführten Systemen zu vermessen, wobei die vorgegebenen Beschichtungsbahnen dann in Abhängigkeit von dem Messergebnis angepasst werden können. Die Vermessung der zu lackierenden Kraftfahrzeugkarosseriebauteile erfolgt hierbei in einem separaten Messprozess unabhängig von den vorgegebenen programmierten Beschichtungsbahnen.

Darüber hinaus können auch Temperaturänderungen im Betrieb zu einer Fehlpositionierung des robotergeführten Rotationszerstäubers relativ zu den zu lackierenden Kraftfahrzeugkarosseriebauteilen führen. So erwärmt sich der Lackierroboter im Betrieb durch elektrische Verlustwärme und Reibung, wodurch sich die Robotergeometrie ändert, was zu einer entsprechenden Fehlpositionierung führt. So können im Roboterbetrieb temperaturbedingte Fehlpositionierungen von bis zu 1mm auftreten. Beim Einsatz eines Rotationszerstäubers ist die exakte Position der zu lackierenden Fläche zwar unerheblich, sofern diese nicht außerhalb der Reichweite des Sprühkegels liegt. Allerdings gilt dies nicht bei der Kontrastdachlackierung mit einem oversprayfreien Applikator (z.B. Druckkopf).

Zur Kompensation dieser temperaturbedingten Fehlpositionierungen ist es aus dem Stand der Technik bekannt, die Robotertemperaturen zyklisch zu messen und das zur Berechnung verwendete Robotermodell in Abhängigkeit von den Temperaturmesswerten anzupassen. Auf diese Weise lassen sich die temperaturbedingten Fehlpositionierungen verringern.

Die vorstehend beschriebenen bekannten Konzepte sind jedoch mit verschiedenen Nachteilen verbunden, die nachfolgend kurz beschrieben werden.

Die globale Bauteilvermessung mittels mehrerer Kameras reicht in der Regel nicht aus, um die erforderliche Positionierungsgenauigkeit zu erreichen, weil Bauteiltoleranzen und Robotertoleranzen nicht berücksichtigt werden. So soll der Positionierungsfehler bei der Lackierung von Kraftfahrzeugkarosseriebauteilen kleiner als 1mm sein.

Bei den mobilen, robotergeführten Bauteilvermessungen können jeweils nur die vermessenen Bereiche lokal kompensiert werden. Bei großflächigen Applikationen machen jedoch die Bauteilränder nur einen Bruchteil aus, wohingegen die eingeschlossene Fläche durch robotergeführte mobile Vermessungen nicht vermessen und kompensiert werden kann, weil dort keine vermessungsfähigen Merkmale (z.B. Ränder) vorhanden sind.

Die vorstehend beschriebene Temperaturkompensation ist dagegen sehr komplex und abhängig von der Güte der Artefakte, der Anzahl und Lage der Messpunkte und der Beschreibung des Robotermodells. Zusätzlich liegen die Artefakte hierbei jeweils nicht direkt im Applikationsbereich, um die Roboter nicht bei der eigentlichen Messaufgabe zu behindern. Derartige Systeme zur Temperaturkompensation sind darüber hinaus relativ komplex, teuer und haben einen hohen Wartungsaufwand.

Zum technischen Hintergrund der Erfindung ist auch hinzuweisen auf EP 1 184 139 A2, US 2015/0328773 A1, WO 2014/090323 A1, CN 108 297 097 A, DE 10 2016 014 944 A1; VOGEL, W.: "Eine interaktive räumliche Benutzerschnittstelle für die Programmierung von Industrierobotern" (Forschungsberichte IWB Bd. 228, München 2009, zugleich Dissertation Technische Universität München 2008); "CAD-Systeme bilden Basis für Offline-Programmierung" (https://www.computer-woche.de/a/cad-systeme-bilden-basis-fuer-offlineprogrammierung/1157492; Archiviert in https://archive.org/web/ am 12.04.2014) und DE 90 01451 U1.

Schließlich offenbart GRUHLER, Gerhard: "ISW Forschung und Praxis - Sensorgeführte Programmierung bahngesteuerter Industrieroboter." (Bd. 67. Springer-Verlag Berlin Heidelberg GmbH, 1987. - ISBN 978-3-662-09860-8) ein Beschichtungsverfahren zur Beschichtung eines Bauteils mit einem Beschichtungsmittel. Dieses bekannte Verfahren ist jedoch noch nicht vollständig befriedigend.

Der Erfindung liegt deshalb die Aufgabe zugrunde, ein entsprechend verbessertes Beschichtungsverfahren und eine entsprechende Beschichtungsanlage zu schaffen.

Diese Aufgabe wird durch ein erfindungsgemäßes Beschichtungsverfahren bzw. eine erfindungsgemäße Beschichtungsanlage gemäß den unabhängigen Ansprüchen gelöst.

Im Folgenden werden nun erfindungsgemäße Einzelheiten betreffend die eigentliche Vermessungsbewegung erläutert. So laufen die Beschichtungsbahnen und die Vermessungsbahn üblicherweise durch einen Oberflächenbereich des zu beschichtenden Bauteils, wie beispielsweise ein Dach einer Kraftfahrzeugkarosserie, wobei dieser Oberflächenbereich durch Ränder begrenzt ist, die vermessen werden können. Hierbei werden für Randpunkte auf den Rändern des Oberflächenbereichs Referenzwerte der räumlichen Randpunktpositionen und/oder der Randpunktausrichtungen vorgegeben. Diese Referenzwerte können beispielsweise anhand eines vorgegebenen CAD-Modells (CAD: Computer Aided Design) ermittelt oder separat vermessen werden. Bei der Vermessungsbewegung werden dann die Messwerte der Randpunktpositionen und/oder der Randpunktausrichtungen der Randpunkte auf den Rändern des Oberflächenbereichs gemessen. Anschließend wird dann die Abweichung zwischen den Messwerten einerseits und den Referenzwerten andererseits ermittelt. Die Beschichtungsbahn wird dann in Abhängigkeit von dieser Messung angepasst.

Beispielsweise kann diese Anpassung mittels eines Korrekturalgorithmus erfolgen, der beispielsweise ein Polynom n-ter Ordnung mit n von 1-6, einen kubischen Spline, einen quintischen Spline, eine kubische Bezier-Kurve oder eine quintische Bezier-Kurve umfassen kann, um einige Beispiele zu nennen.

Nachfolgend werden Einzelheiten eines möglichen Korrekturalgorithmus beschrieben. Grundidee des Korrekturalgorithmus ist, dass der Korrekturwert eines Messpunktes einen Bahnpunkt umso stärker beeinflusst, je kleiner der Abstand zwischen Messpunkt und Bahnpunkt ist.

Für den Korrekturalgorithmus werden die Ränder abschnittsweise durch Geradengleichungen angenähert. Jeweils zwei benachbarte Messpunkte definieren eine Gerade, die zwischen den zwei Messpunkten oder - wenn es keinen weiteren Messpunkt in einer Richtung gibt - auch darüber hinaus gültig ist. Für die Messpunkte auf dem linken und rechten Rand werden die Geraden in der Form y = f(x), für den Start- und Endrand in der Form x = f(y) dargestellt. Dadurch können die Geradengleichungen immer als y = m*x +b bzw. x = m*y + b ohne numerische Probleme mit m gegen unendlich dargestellt werden.

Die Geraden werden für die programmierten Messpunkte (=Messpunkte auf der Nullkarosse) und für die korrigierten Messpunkte (=programmierte Messpunkte + Korrekturwert vom Messrechner) berechnet.

Für die Korrektur in Y-Richtung eines Bahnpunktes P wird über die XP-Koordinate bestimmt, welcher Abschnitt der Gleichungen für die linken/rechten Ränder zu diesem Punkt gehören und dann die XP -Koordinate in die entsprechenden Gleichungen eingesetzt.

> Linker Rand : YL = fL(XP) und YKorrL = fL(XP).      Damit erhält man DeltaL = YKorrL - YL
>
> Rechter Rand : YR = fR(XP) und YKorrR = fR(XP).      Damit erhält man DeltaR = YKorrR - YR

DeltaL und DeltaR werden nun mit dem Abstand des Bahnpunktes P vom linken und rechten Rand gewichtet, um die Korrektur in Y-Richtung zu erhalten:

Mit DistL =ABS (YP - YL) und Dist = ABS(YR - YL) erhält man die

Gewichtungen

$$fL = 1 - DistL / Dis$$

(wird größer, wenn DistL kleiner wird!)

$$fR = DistL / Dist$$

mit der Eigenschaft fL + fR = 1

$$Korrekturwert\ in\ Y\text{-}Richtung:\ DeltaL * fL + DeltaR * fR$$

Für die Korrektur in X-Richtung eines Bahnpunktes P wird über die YP-Koordinate bestimmt, welcher Abschnitt der Gleichungen für die linken/rechten Ränder zu diesem Punkt gehören und dann die YP -Koordinate in die entsprechenden Gleichungen eingesetzt.

Start Rand: XS = fS(YP) und XKorrS = fS(XP).    Damit erhält man DeltaS = XKorrY - XS

Rechter Rand : XE = fR(YP) und XKorrE = fE(XP).    Damit erhält man DeltaR = XKorrE - XE

DeltaS und DeltaE werden nun mit dem Abstand des Bahnpunktes P vom Start- und Endrand gewichtet, um die Korrektur in X-Richtung zu erhalten:

Mit DistS =ABS (XP - XS) und Dist = ABS(XE -XS) erhält man die

Gewichtungen:

$$fS = 1 - DistS / Dist$$

(wird größer, wenn DistS kleiner wird!)

$$fE = DistS / Dist$$

mit der Eigenschaft fS + fE = 1

$$Korrekturwert \ in \ X\text{-}Richtung: \ DeltaS* fS + DeltaE * fE$$

Für die Korrektur in Z-Richtung kann die Projektion in die XZ-Ebene mit dem linken und rechten Rand oder die Projektion in die YZ-Ebene mit dem Startrand und dem Endrand verwendet werden. Im ersten Fall erhält man Geradengleichungen der Form z = f(x), im zweiten Fall Geradengleichungen der Form z = f(y). In beiden Ebenen erfolgt die Berechnung analog zur Berechnung der Korrekturen in Y-Richtung bzw. in X-Richtung. Es werden beide Varianten gerechnet und als Z-Korrektur der Mittelwert aus den Ergebnissen der beiden Varianten verwendet.

Weiterhin besteht im Rahmen der Erfindung die Möglichkeit, dass der berandete Oberflächenbereich (z.B. Dach einer Kraftfahrzeugkarosserie) auf dem zu beschichtenden Bauteil von zwei Beschichtungsrobotern vermessen und beschichtet wird, wobei die beiden Beschichtungsroboter vorzugsweise auf gegenüberliegenden Seiten des Oberflächenbereichs angeordnet sind, beispielsweise auf gegenüber liegenden Seiten einer Lackierstraße. Der Oberflächenbereich kann dann in zwei Teilbereiche unterteilt werden, die unmittelbar aneinander angrenzen. Beispielsweise kann es sich hierbei um eine linke Dachhälfte und eine rechte Dachhälfte handeln. Der erste Beschichtungsroboter misst dann mit seinem Messsystem den gesamten Oberflächenbereich oder einen der beiden Teilbereiche. Die Beschichtungsbahn wird dann in Abhängigkeit von der räumlichen Vermessung durch den ersten Beschichtungsroboter angepasst. Anschließend beschichtet der erste Beschichtungsroboter dann den ersten Teilbereich (z.B. eine Dachhälfte) mit dem Beschichtungsmittel, wobei der erste Beschichtungsroboter die optimierte, angepasste Beschichtungsbahn abfährt. Anschließend vermisst dann der zweite Beschichtungsroboter den zweiten Teilbereich und passt die Beschichtungsbahn in Abhängigkeit von der räumlichen Vermessung an. Schließlich beschichtet dann der zweite Beschichtungsroboter den zweiten Teilbereich (z.B. die andere Dachhälfte) mit dem Beschichtungsmittel. Der zweite Roboter kann seine übrige Applikationsfläche vermessen, indem er die erste Applikationsbahn des ersten Roboters, welche gleichzeitig die Grenze zwischen den beiden Teilbereichen darstellt, vermisst.

Die Erfindung geht zur Lösung der Aufgabe vorzugsweise einen völlig anderen Weg als die eingangs beschriebenen bekannten Konzepte. So haben die bekannten Konzepte das Ziel, die Positionierungsgenauigkeit des Roboters zu verbessern, indem beispielsweise temperaturbedingte Positionierungsfehler kompensiert werden. Es wird also versucht, die Ist-Position des Applikators möglichst an die vorgegebene Soll-Position anzunähern. Der erfindungsgemäße Ansatz besteht dagegen nicht darin, die Absolutgenauigkeit des Roboters hinsichtlich der Positionierung generell zu verbessern, um das Applikationsergebnis zu optimieren, sondern durch direkte Messung an dem zu lackierenden Bauteil selbst alle Abweichungen lokal zu erfassen und durch eine individuelle Anpassung des Roboterprogramms die Applikationsgenauigkeit zu erhöhen. Für die Messung des zu applizierenden Bauteils soll idealerweise die gleiche Bewegung wie bei der anschließenden Applikation durchgeführt werden. Dadurch sind das Verhalten des Roboters und der Einfluss aller Fehler während der Messung und Applikation gleich. Hierbei ist die genaue Ursache eines Positionierungsfehlers (z.B. Abweichungen der Bauteilposition, der Bauteilform oder temperaturbedingte Positionierungsfehler) nicht von Belang, denn der einzelne Messwert spiegelt die Summe aller Fehler an der jeweiligen Stelle wider, was eine optimale Kompensation erlaubt.

Das erfindungsgemäße Beschichtungsverfahren dient vorzugsweise zur Beschichtung von Kraftfahrzeugkarosseriebauteilen. Grundsätzlich eignet sich das erfindungsgemäße Beschichtungsverfahren jedoch auch zur Beschichtung von anderen Bauteiltypen.

Weiterhin ist zu erwähnen, dass das erfindungsgemäße Beschichtungsverfahren vorzugsweise zur Lackierung von Bauteilen dient. Die Erfindung ist jedoch auch hinsichtlich des Typs des Beschichtungsmittels nicht auf Lacke beschränkt, sondern grundsätzlich auch mit anderen Typen von Beschichtungsmitteln realisierbar.

Bei dem erfindungsgemäßen Beschichtungsverfahren wird wie auch bei den bekannten Beschichtungsverfahren eine Beschichtungsbahn vorgegeben. Beispielsweise kann die Vorgabe der Beschichtungsbahnen durch manuelles "Teachen" erfolgen. Alternativ kann die Beschichtungsbahn mittels Software erzeugt werden, beispielsweise mit einem Offline-Programmiersystem. Hierbei werden auf Basis der CAD-Daten automatisch Applikationsbahnen erzeugt, die über die Oberfläche des zu beschichtenden Bauteils führen. Entlang dieser Beschichtungsbahn soll dann später der Farbauftreffpunkt des Applikationsgeräts (z.B. Rotationszerstäuber) über die Oberfläche des zu beschichtenden Bauteils geführt werden. Die Programmierung derartiger Beschichtungsbahnen ist an sich aus dem Stand der Technik bekannt und wird entsprechend der üblichen Fachterminologie auch als "Teachen" bezeichnet.

Darüber hinaus sieht auch das erfindungsgemäße Beschichtungsverfahren vorzugsweise vor, dass das zu beschichtende Bauteil (z.B. Kraftfahrzeugkarosseriebauteil) mittels eines Messsystems vermessen wird und zwar hinsichtlich Position im dreidimensionalen Raum, Ausrichtung und/oder Form.

In Abhängigkeit von dieser Bauteilvermessung wird dann vorzugsweise die programmierte Beschichtungsbahn entsprechend angepasst, um Positionierungsfehler zu vermeiden.

Bei der eigentlichen Applikation wird das Applikationsgerät (z.B. Druckkopf oder ein sonstiges Applikationsgerät, das das Beschichtungsmittel randscharf und oversprayfrei aufträgt) dann vorzugsweise entlang der angepassten Beschichtungsbahn über die Oberfläche des zu beschichtenden Bauteils geführt, was vorzugsweise mittels eines mehrachsigen Beschichtungsroboters erfolgt. Während dieser Applikationsbewegung gibt das Applikationsgerät dann das Beschichtungsmittel auf die Oberfläche des zu beschichtenden Bauteils ab.

Der Begriff des Applikationsgeräts soll allgemein verstanden werden und beinhaltet sowohl Applikatoren, die das Beschichtungsmittel z.B. mittel Luft und/oder rotierenden Elementen zerstäuben, als auch solche, die Beschichtungsmittel ohne Zerstäubung auftragen wie z.B. Druckköpfe oder solche, die mindestens einen eng begrenzten Beschichtungsmittelstrahl abgeben (wie z.B. in DE 10 2013 002 433 A1, DE 10 2013 002 413 A1, DE 10 2013 002 412 A1 oder DE 10 2013 002 411 A1 beschrieben).

Das erfindungsgemäße Beschichtungsverfahren unterscheidet sich nun gegenüber dem eingangs beschriebenen bekannten Beschichtungsverfahren mit einer robotergeführten Bauteilvermessung vorzugsweise im Wesentlichen durch die Schritte zur räumlichen Vermessung des zu beschichtenden Bauteils.

So wird hierzu vorzugsweise eine Messbahn vorgegeben, die über die Oberfläche des zu beschichtenden Bauteils führt, wobei die Messbahn im Wesentlichen der Beschichtungsbahn entspricht. Zur Bauteilvermessung wird dann ein Messsystem entlang der vorgegebenen Messbahn im Rahmen einer Vermessungsbewegung über die Bauteiloberfläche geführt, wobei der Farbauftreffpunkt des Applikationsgeräts der vorgegebenen Messbahn folgt, d.h. ein Messsensor folgt der Messbahn.

Während dieser Vermessungsbewegung erfolgt dann ein räumliches Vermessen des zu beschichtenden Bauteils durch das Messsystem.

Wichtig ist hierbei, dass die Vermessungsbewegung vorzugsweise im Wesentlichen der späteren Applikationsbewegung entspricht, so dass während der Vermessungsbewegung im Wesentlichen die gleichen temperaturbedingten Positionierungsfehler auftreten wie bei der eigentlichen Applikationsbewegung. Es ist deshalb nicht mehr erforderlich, die temperaturbedingten Positionierungsfehler während der eigentlichen Applikationsbewegung durch aufwändige Temperaturmessungen zu kompensieren. Vielmehr können die temperaturbedingten Positionierungsfehler bei der eigentlichen Applikationsbewegung akzeptiert werden, weil sie bereits bei der vorangehenden Vermessungsbewegung berücksichtigt wurden.

Die Erfindung unterscheidet sich also von den eingangs beschriebenen Bauteilvermessungen mit robotergeführten Messsystemen vorzugsweise dadurch, dass die Vermessungsbewegung im Wesentlichen der Applikationsbewegung entspricht. Im Gegensatz dazu erfolgte die Vermessung mit robotergeführten Messsystemen bisher mit völlig anderen Bewegungen.

Es wurde bereits vorstehend erwähnt, dass die Vermessungsbewegung vorzugsweise möglichst genau der späteren Applikationsbewegung entspricht. Dies gilt zunächst für Abweichungen zwischen der räumlichen Position des Farbauftreffpunkts bei der Vermessungsbewegung einerseits und bei der Applikationsbewegung andererseits. So sollten die räumlichen Abweichungen zwischen der Applikationsbewegung einerseits und der Vermessungsbewegung andererseits vorzugsweise kleiner sein als 100mm, 60mm, 50mm, 40mm, 30mm, 20mm, 10mm, 5mm, 2mm, oder 1mm.

Die Vermessungsbewegung sollte jedoch vorzugsweise nicht nur hinsichtlich der Position des Farbauftreffpunkts möglichst genau der späteren Applikationsbewegung entsprechen. Vielmehr sollte auch die Ausrichtung des Applikationsgeräts bei der Vermessungsbewegung möglichst genau der späteren Ausrichtung bei der Applikationsbewegung entsprechen. So sollte die Winkelabweichung des Applikationsgerätes bei der Vermessungsbewegung einerseits und bei der Applikationsbewegung andererseits vorzugsweise kleiner sein als 45°, 30°, 20°, 10°, 5°, 2° oder 1°.

Weiterhin ist zu berücksichtigen, dass sich eine bestimmte Position und Ausrichtung des robotergeführten Applikationsgeräts üblicherweise nicht nur mit einer einzigen Roboterpose realisieren lässt, sondern mit unterschiedlichen Roboterposen. Der im Rahmen der Erfindung verwendete Begriff einer Roboterpose bedeutet hierbei die Vielzahl der Achswinkel des Roboters. Eine bestimmte Roboterpose lässt sich als eindeutig definieren durch einen Vektor, der als Komponenten sämtliche Achswinkel des Roboters enthält. Vorzugsweise erfolgt die Vermessungsbewegung auch mit den gleichen Roboterposen wie die spätere Applikationsbewegung. So sollten die Winkelabweichungen der einzelnen Roboterachsen zwischen der Applikationsbewegung einerseits und der Vermessungsbewegung andererseits vorzugsweise kleiner sein als 20°, 10° oder 5°.

Darüber hinaus sollte die Vermessungsbewegung vorzugsweise auch mit der gleichen Bewegungsdynamik erfolgen wie die spätere Applikationsbewegung, d.h. mit derselben Bahngeschwindigkeit des Farbauftreffpunkts, derselben Bahnbeschleunigung des Farbauftreffpunkts, denselben Achspositionen der Roboterachsen, denselben Achsgeschwindigkeiten der Roboterachsen und/oder denselben Achsbeschleunigungen der Roboterachsen.

So sollte die Abweichung der Bahngeschwindigkeit des Farbauftreffpunkts zwischen der Vermessungsbewegung und der Applikationsbewegung vorzugsweise kleiner sein als 60%, 50%, 40%, 30%, 20%, 10% oder sogar kleiner als 5%. In absoluten Werten sollte die Abweichung der Bahngeschwindigkeit vorzugsweise kleiner sein als 500mm/s, 400mm/s oder 300mm/s. Hinsichtlich der Bahnbeschleunigung, der Achsgeschwindigkeiten der Roboterachsen und der Achsbeschleunigungen der Roboterachsen sollten die Abweichungen zwischen der Vermessungsbewegung einerseits und der Applikationsbewegung andererseits vorzugsweise kleiner sein als 10% oder 5%.

Die Beschichtungsbahn wird also vorzugsweise so angepasst, dass folgende Toleranzen mindestens teilweise kompensiert werden:

- Position des Bauteils,
- Form des Bauteils,
- statische Positionierungsungenauigkeiten des Beschichtungsroboters,
- dynamische Positionierungsungenauigkeiten des Beschichtungsroboters, und/oder
- temperaturbedingte Positionierungsungenauigkeiten des Beschichtungsroboters.

Die Erfindung beansprucht jedoch nicht nur Schutz für das vorstehend beschriebene erfindungsgemäße Beschichtungsverfahren. Vielmehr beansprucht die Erfindung auch Schutz für eine entsprechende Beschichtungsanlage zur Beschichtung eines Bauteils. Insbesondere kann es sich hierbei um eine Lackieranlage zur Lackierung von Kraftfahrzeugkarosseriebauteilen handeln.

Die erfindungsgemäße Beschichtungsanlage weist zunächst in Übereinstimmung mit dem Stand der Technik mindestens einen mehrachsigen Beschichtungsroboter auf, der vorzugsweise eine serielle Roboterkinematik hat und ein Applikationsgerät (z.B. Rotationszerstäuber) entlang einer vorgegebenen Beschichtungsbahn über die Bauteiloberfläche des zu beschichtenden Bauteils führen kann.

Darüber hinaus verfügt die erfindungsgemäße Beschichtungsanlage in Übereinstimmung mit dem Stand der Technik über ein Messsystem zur räumlichen Vermessung des zu beschichtenden Bauteils.

Weiterhin umfasst auch die erfindungsgemäße Beschichtungsanlage eine Steuereinheit zur Ansteuerung des Applikationsgeräts und des Beschichtungsroboters und zur Abfrage des Messsystems.

Die erfindungsgemäße Beschichtungsanlage zeichnet sich nun dadurch aus, dass die Steuereinheit den Beschichtungsroboter und das Applikationsgerät so ansteuert und das Messsystem so abfragt, dass die Beschichtungsanlage das Beschichtungsverfahren gemäß der Erfindung ausführt.

Das Messsystem ist hierbei vorzugsweise robotergeführt und an dem Beschichtungsroboter montiert und wird von dem Beschichtungsroboter über die Oberfläche des zu beschichtenden Bauteils bewegt. Beispielsweise kann das Messsystem einen Lichtschnittsensor oder eine Kamera aufweisen, um nur einige Beispiele zu nennen.

Bei dem Applikationsgerät kann es sich um einen Zerstäuber (z.B. Rotationszerstäuber) handeln. Es besteht jedoch auch die Möglichkeit, dass es sich bei dem Applikationsgerät um ein Oversprayfreies Applikationsgerät handelt, das im Gegensatz zu einem Zerstäuber keinen Sprühstrahl abgibt, sondern einen räumlich eng begrenzten Beschichtungsmittelstrahl. Derartige Overspray-freie Applikationsgeräte sind aus dem Stand der Technik aus der letzten Zeit bekannt und werden auch als Druckköpfe bezeichnet.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:

Figur 1    ein Flussdiagramm zur Verdeutlichung des erfindungsgemäßen Beschichtungsverfahrens,

Figur 2A    eine schematische Darstellung einer erfindungsgemäßen Beschichtungsanlage,

Figur 2B    eine vergrößerte Detailansicht aus Figur 2A,

Figur 3    ein Flussdiagramm zur Verdeutlichung des eigentlichen Vermessungsvorgangs,

Figur 4A    eine Bauteilfläche ohne Korrektur der Beschichtungsbahn,

Figur 4B    eine Bauteilfläche mit korrigierten Beschichtungsbahnen,

Figur 5    ein Flussdiagramm zur Verdeutlichung einer Erfindungsvariante,

Figur 6A    eine Bauteilfläche,

Figur 6B    die Bauteilfläche gemäß Figur 6A, wobei die eine Hälfte lackiert ist,

Figur 6C    die Bauteilfläche aus den Figuren 6A und 6B mit der Vermessung der anderen Bauteilhälfte, sowie

Figur 6D    die Bauteilfläche aus den Figuren 6A-6C bei der Lackierung der anderen Bauteilhälfte.

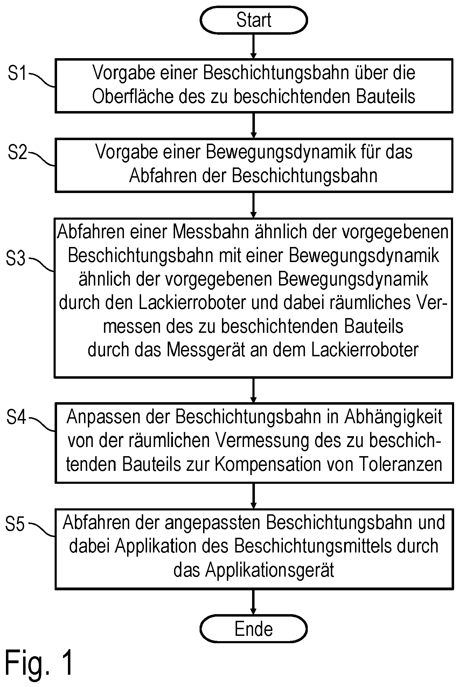

Im Folgenden wird nun das Flussdiagramm gemäß Figur 1 erläutert, welches das erfindungsgemäße Beschichtungsverfahren wiedergibt.

In einem ersten Schritt S1 wird zunächst eine Beschichtungsbahn vorgegeben, die über die Oberfläche des zu beschichtenden Bauteils führt und den gewünschten Bahnverlauf des Farbauftreffpunkts des verwendeten Applikationsgeräts (z.B. Rotationszerstäuber) wiedergibt. Die Beschichtungsbahn gibt jedoch nicht die räumliche Position des Farbauftreffpunkts wieder, sondern auch die räumliche Ausrichtung des Applikationsgeräts entlang der Beschichtungsbahn. Die Definition einer solchen Beschichtungsbahn erfolgt üblicherweise durch eine Programmierung, was aus dem Stand der Technik auch als "Teachen" bekannt ist. Die Vorgabe der Beschichtungsbahn kann jedoch auch offline erfolgen.

In einem weiteren Schritt S2 wird dann eine gewünschte Bewegungsdynamik für das Abfahren der Beschichtungsbahn vorgegeben. Die Bewegungsdynamik umfasst hierbei die Geschwindigkeit und die Beschleunigung des Farbauftreffpunkts entlang der vorgegebenen Beschichtungsbahn.

In einem Schritt S3 wird dann eine Messbahn ähnlich der vorgegebenen Beschichtungsbahn mit einer ähnlichen Bewegungsdynamik abgefahren, wobei ein von dem Lackierroboter geführtes Messgerät das Bauteil vermisst. Wichtig ist hierbei, dass die Messbewegung möglichst geringe Abweichungen gegenüber der späteren Applikationsbewegung aufweist, damit die Positionierungsfehler während der Messbewegung möglichst genau mit den Positionierungsfehlern während der Applikationsbewegung übereinstimmen.

In einem Schritt S4 wird dann die in dem Schritt S1 vorgegebene Beschichtungsbahn angepasst und zwar in Abhängigkeit von der in dem Schritt S3 erfolgten räumlichen Vermessung während der Messbewegung.

In einem Schritt S5 wird dann die optimierte Beschichtungsbahn abgefahren, wobei das Applikationsgerät das Beschichtungsmittel appliziert. Die Schritte S1-S4 geben also die Erstellung, Vermessung und Optimierung der Beschichtungsbahn wieder, während der Schritt S5 den eigentlichen Applikationsbetrieb wiedergibt.

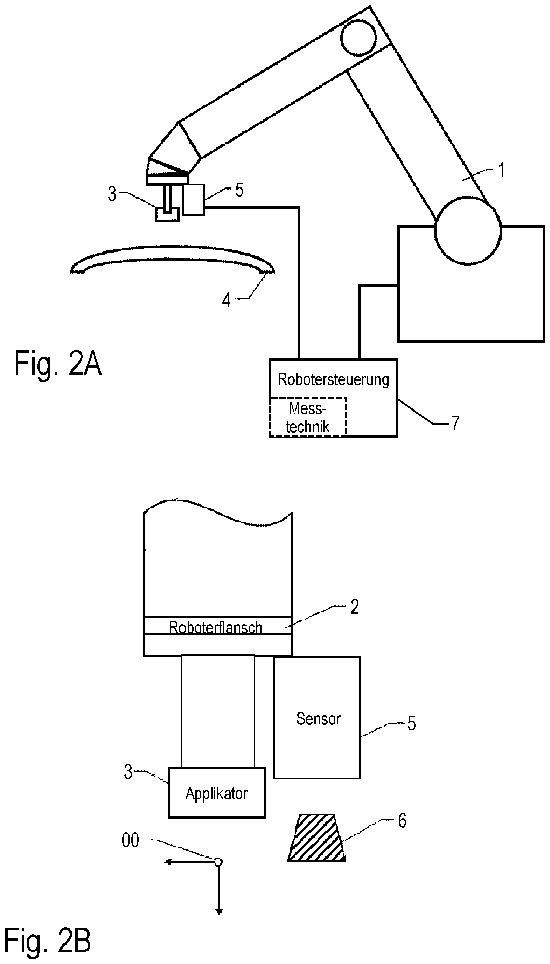

Die Figuren 2A und 2B zeigen in schematischer Form eine erfindungsgemäße Beschichtungsanlage mit einem Beschichtungsroboter 1 mit einem Roboterflansch 2 und einem an dem Roboterflansch 2 befestigten Applikator 3, wie beispielsweise einem Rotationszerstäuber. Der Applikator 3 appliziert im Betrieb ein Beschichtungsmittel auf ein hier nur schematisch dargestelltes Bauteil 4.

Darüber hinaus ist an dem Roboterflansch 2 noch ein Sensor 5 angebracht, der ein Sensor-Messfenster 6 aufweist und eine Vermessung des Bauteils 4 ermöglicht. Beispielsweise kann es sich bei dem Sensor 5 um einen kamera-basierten Sensor handeln, jedoch ist beispielsweise auch ein Lichtschnittsensor möglich.

Weiterhin umfasst die Beschichtungsanlage eine Steuereinheit 7, die eine Robotersteuerung beinhaltet, um den Beschichtungsroboter 1 anzusteuern. Darüber hinaus beinhaltet die Steuereinheit 7 eine Messtechnik, um den Sensor 5 abzufragen. Die Messtechnik ist nicht zwingend in die Robotersteuerung integriert. Vielmehr kann sie sich in einem eigenständigen System / PC befinden.

Die Steuereinheit 7 steuert dann den Beschichtungsroboter 1 so an und fragt den Sensor 5 so ab, dass das erfindungsgemäße Beschichtungsverfahren ausgeführt wird.

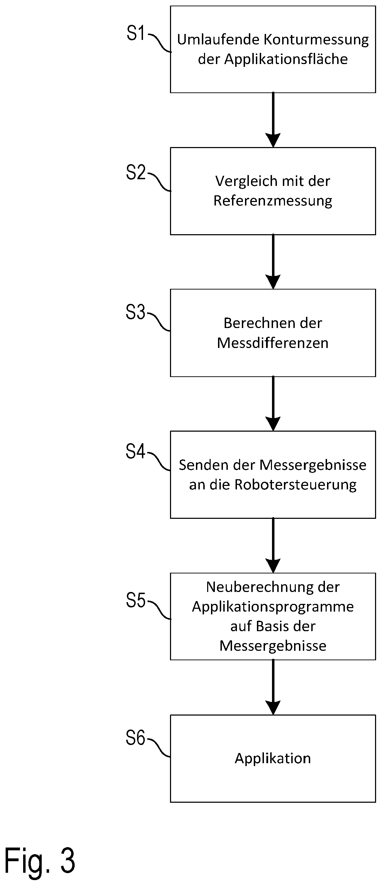

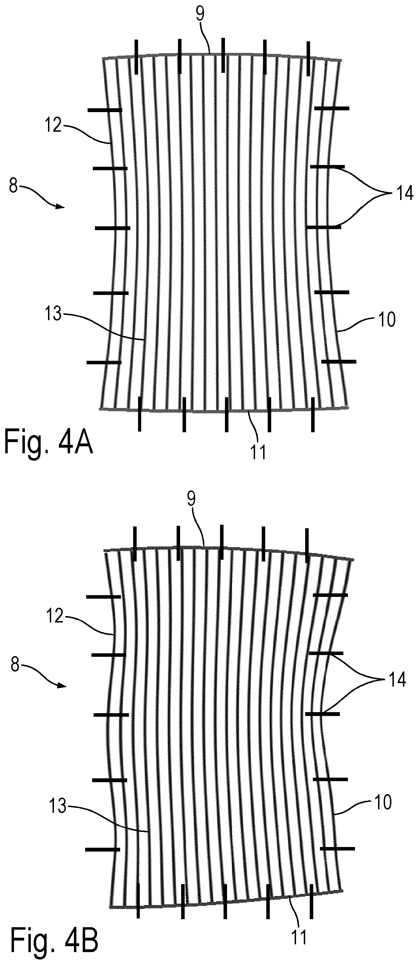

Im Folgenden wird nun das Flussdiagramm gemäß Figur 3 beschrieben, wobei auf die Figuren 4A und 4B Bezug genommen wird.

In einem ersten Schritt S1 erfolgt eine umlaufende Konturmessung einer Bauteilfläche 8, wobei es sich beispielsweise um ein Dach einer Kraftfahrzeugkarosserie handeln kann.

Die Bauteilfläche 8 weist Ränder 9-12 auf, welche die Bauteilfläche 8 begrenzen.

Innerhalb der Bauteilfläche 8 verlaufen hierbei vorgegebene Beschichtungsbahnen 13, die hier nur schematisch dargestellt sind.

In einem Schritt S1 erfolgt eine umlaufende Konturmessung der Bauteilfläche 8. Hierbei werden Randpunkte 14 auf den Rändern 9-12 der Bauteilfläche 8 vermessen.

In einem Schritt S2 werden die Koordinaten der gemessenen Randpunkte 14 dann mit einer Referenzmessung verglichen, wobei die entsprechenden Referenzwerte beispielsweise durch ein CAD-Modell vorgegeben werden können.

In einem Schritt S3 werden dann die Abweichungen zwischen den Messwerten der Randpunkte 14 und den vorgegebenen Referenzwerten berechnet.

In einem Schritt S4 werden dann die Messergebnisse an eine Robotersteuerung weitergegeben.

In einem Schritt S5 werden dann die Beschichtungsbahnen 13 neu berechnet, um Positionierungsfehler zu berücksichtigen.

In einem Schritt S6 erfolgt dann die eigentliche Applikation mit den optimierten Beschichtungsbahnen 13.

Die Figur 4B zeigt hierbei die entsprechenden verformten Beschichtungsbahnen 13 entsprechend der Optimierung.

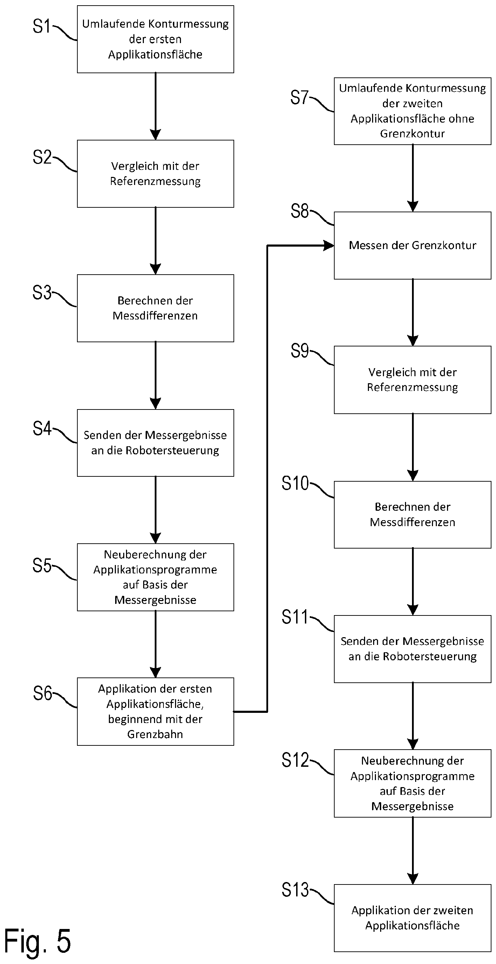

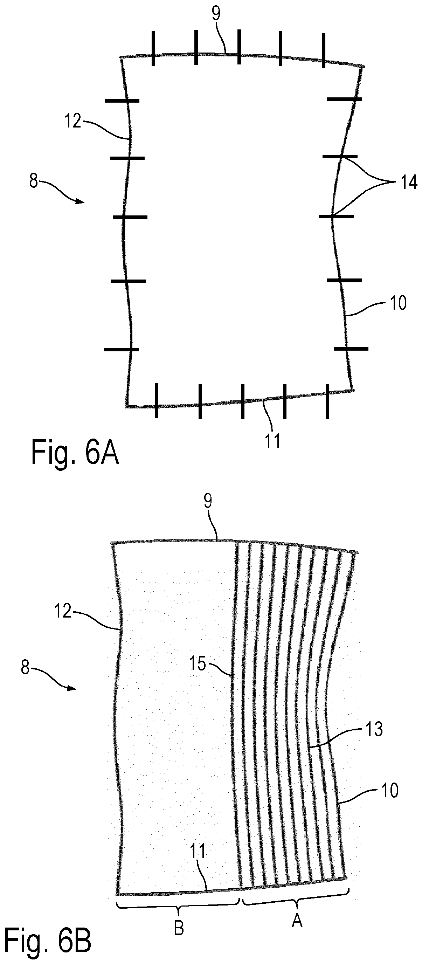

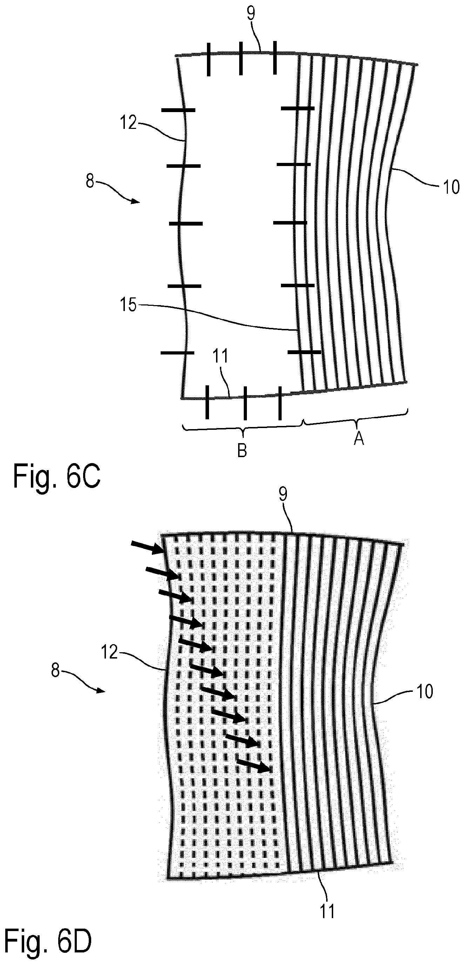

Im Folgenden wird nun das Flussdiagramm gemäß Figur 5 beschrieben, wobei auf die Figuren 6A bis 6D Bezug genommen wird.

Hierbei ist zu erwähnen, dass das Beschichtungsverfahren in dieser Variante der Erfindung von zwei Beschichtungsrobotern durchgeführt wird, die auf gegenüber liegenden Seiten einer Lackierstraße angeordnet sind.

Die Bauteilfläche 8 wird hierbei in zwei Teilflächen A, B unterteilt, wobei es sich beispielsweise um eine linke und eine rechte Dachhälfte einer Kraftfahrzeugkarosserie handeln kann.

In einem Schritt S1 erfolgt zunächst eine umlaufende Konturmessung der ersten Teilfläche A der Applikationsfläche, beispielsweise der in Figur 6A dargestellten rechten Hälfte der Bauteilfläche 8.

In einem Schritt S2 erfolgt dann in der bereits vorstehend beschriebenen Weise der Vergleich der Koordinaten der Randpunkte 14 mit den entsprechenden Koordinaten der Referenzwerte.

In einem Schritt S3 werden dann die Messdifferenzen berechnet.

In einem Schritt S4 werden die Messergebnisse an eine Steuereinheit übertragen, die dann in einem Schritt S5 die Beschichtungsbahnen in der Teilfläche A (z.B. rechte Dachhälfte) neu berechnet.

In einem Schritt S6 wird dann die Teilfläche A beschichtet, wie in Figur 6B dargestellt ist.

In einem Schritt S7 erfolgt auch eine Konturmessung der zweiten Teilfläche B der Bauteilfläche 8, wobei es sich beispielsweise um die andere Dachhälfte handeln kann.

In einem Schritt S8 erfolgt dann ein Vergleich mit der Grenzkontur, wobei es sich um eine Beschichtungsbahn 15 handeln kann, die zuvor in dem Schritt S6 lackiert wurde, wobei diese Beschichtungsbahn 15 von der Beschichtungsbahn 13 unabhängig sein kann.

In dem Schritt S9 erfolgt dann wieder ein Vergleich mit der Referenzmessung und die Messdifferenzen werden in dem Schritt S10 berechnet.

Anschließend werden die Messergebnisse in dem Schritt S11 an eine Steuereinheit übertragen, die dann in dem Schritt S11 die Beschichtungsbahnen neu berechnet.

In dem Schritt S13 erfolgt dann die Applikation der zweiten Teilfläche B, wie in Figur 6D gestrichelt dargestellt ist.

Die vorgenannten Beispiele der Bearbeitung einer Dachfläche sind nur exemplarisch. In selbiger Weise kann jede andere Fläche z.B. einer Kraftfahrzeugkarosserie vermessen und beschichtet werden, beispielsweise A-Säule, Dachholm oder C-Säule.

Bezugszeichenliste:

| | |
|---|---|
| 1 | Beschichtungsroboter |
| 2 | Roboterflansch |
| 3 | Applikator |
| 4 | Bauteil |
| 5 | Sensor |
| 6 | Sensor-Messfenster |
| 7 | Steuereinheit |
| 8 | Bauteilfläche |
| 9-12 | Ränder der Bauteilfläche |
| 13 | Beschichtungsbahnen |
| 14 | Randpunkte |
| 15 | Beschichtungsbahn |

**Patentansprüche**

1. Beschichtungsverfahren zur Beschichtung eines Bauteils (4) mit einem Beschichtungsmittel, mit den folgenden Schritten:

a) Vorgabe mindestens einer Beschichtungsbahn (13, 15) eines Beschichtungsroboters (1) zur Bewegung eines Farbauftreffpunkts eines Applikationsgeräts (3) entlang der vorgegebenen mindestens einen Beschichtungsbahn (13, 15) über die Oberfläche des zu beschichtenden Bauteils (4), wobei die mindestens einen Beschichtungsbahn (13, 15) durch einen Oberflächenbereich des zu beschichtenden Bauteils (4) verläuft, der durch Ränder begrenzt ist,

b) Vorgabe von Referenzwerten der räumlichen Randpunktpositionen und/oder der Randpunktausrichtungen für Randpunkte auf den Rändern des Oberflächenbereichs,

c) Räumliches Vermessen von Position, Ausrichtung und/oder Form des zu beschichtenden Bauteils (4) oder eines Teils des zu beschichtenden Bauteils (4) mittels eines Messsystems (5), wobei Messwerte der Randpunktpositionen und/oder der Randpunktausrichtungen der Randpunkte auf den Rändern des Oberflächenbereichs gemessen werden,

d) Ermitteln der Abweichung zwischen den Messwerten der Randpunktpositionen und/oder der Randpunktausrichtungen einerseits und den Referenzwerten der Randpunktpositionen und/oder der Randpunktausrichtungen anderseits, und

e) Anpassung der Beschichtungsbahn (13, 15) in Abhängigkeit von der Abweichung zwischen den Referenzwerten der Randpunkte und den Messwerten der Randpunkte,

f) Bewegen eines Applikationsgeräts (3) entlang der mindestens einen angepassten Beschichtungsbahn (13, 15) über die Oberfläche des zu beschichtenden Bauteils (4), und

g) Applizieren des Beschichtungsmittels durch das Applikationsgerät (3) auf die Oberfläche des zu beschichtenden Bauteils (4) während der Bewegung des Applikationsgeräts (3) entlang der mindestens einen angepassten Beschichtungsbahn (13, 15).

2. Beschichtungsverfahren nach Anspruch 1, **dadurch gekennzeichnet, dass** der Schritt c) zum räumlichen Vermessen von Position, Ausrichtung und/oder Form des zu beschichtenden Bauteils (4) oder eines Teils des zu beschichtenden Bauteils (4) weiterhin die folgenden Schritte umfasst:

c1) Vorgabe einer Messbahn zur Bewegung des Messsystems (5) über die Oberfläche des zu beschichtenden Bauteils (4), wobei die Messbahn im Wesentlichen der Beschichtungsbahn (13, 15) entspricht,

c2) Bewegen eines Messsystems (5) entlang der vorgegebenen Messbahn, wobei der Farbauftreffpunkt des Applikationsgeräts (3) der vorgegebenen Messbahn folgt, und

c3) Räumliches Vermessen des zu beschichtenden Bauteils (4) durch das Messsystem (5) während der Vermessungsbewegung entlang der Messbahn.

3. Beschichtungsverfahren nach Anspruch 2, **dadurch gekennzeichnet, dass** die Abweichungen zwischen der räumlichen Position des Farbauftreffpunkts bei der Vermessungsbewegung entlang der Messbahn einerseits und der räumlichen Position des Farbauftreffpunkts bei der Applikationsbewegung entlang der Beschichtungsbahn (13, 15) andererseits kleiner sind als 40mm, 30mm, 20mm, 10mm, 5mm, 2mm oder 1mm.

4. Beschichtungsverfahren nach Anspruch 2 oder 3, **dadurch gekennzeichnet, dass** das Applikationsgerät (3) bei der Vermessungsbewegung im Wesentlichen die gleiche räumliche Ausrichtung hat wie bei der Applikationsbewegung.

5. Beschichtungsverfahren nach Anspruch 4, **dadurch gekennzeichnet,**

a) **dass** die Winkelabweichungen zwischen der Ausrichtung des Applikationsgeräts (3) bei der Vermessungsbewegung einerseits und der Ausrichtung des Applikationsgeräts (3) bei der Applikationsbewegung andererseits kleiner sind als 45°, 30°, 20°, 10°, 5°, 2° oder 1°, und/oder

b) **dass** die Winkelabweichungen zwischen der Ausrichtung der einzelnen Roboterachsen bei der Vermessungsbewegung einerseits und der Ausrichtung der einzelnen Roboterachsen bei der Applikationsbewegung andererseits kleiner sind als 20°, 10° oder 5°.

6. Beschichtungsverfahren nach einem der vorhergehenden Ansprüche,
**dadurch gekennzeichnet,**

a) **dass** die Applikationsbewegung entlang der mindestens einen Beschichtungsbahn (13, 15) mit einer bestimmten Bewegungsdynamik erfolgt,

b) **dass** die Vermessungsbewegung entlang der Beschichtungsbahn (13, 15) mit einer bestimmten Bewegungsdynamik erfolgt, und

c) **dass** die Vermessungsbewegung im Wesentlichen mit der gleichen Bewegungsdynamik erfolgt wie die Applikationsbewegung, nämlich hinsichtlich der Bahngeschwindigkeit des Farbauftreffpunkts des Applikationsgeräts (3) und/oder hinsichtlich der Bahnbeschleunigung des Farbauftreffpunkts des Applikationsgeräts (3).

7. Beschichtungsverfahren nach Anspruch 6, **dadurch gekennzeichnet,**

   a) **dass** die Abweichungen zwischen der Bahngeschwindigkeit des Farbauftreffpunkts bei der Vermessungsbewegung einerseits und der Bahngeschwindigkeit des Farbauftreffpunkts bei der Applikationsbewegung andererseits kleiner sind als

   a1) 60%, 50%, 40%, 30%, 20%, 10% oder 5%, und/oder
   a2) 500mm/s, 400mm/s, 300mm/s,

   b) **dass** die Abweichungen zwischen der Bahnbeschleunigung des Farbauftreffpunkts bei der Vermessungsbewegung einerseits und der Bahnbeschleunigung des Farbauftreffpunkts bei der Applikationsbewegung andererseits kleiner sind als 10% oder 5%.

8. Beschichtungsverfahren nach einem der vorhergehenden Ansprüche, **dadurch gekennzeichnet,**

   a) **dass** die Anzahl der vermessenen Ränder des Oberflächenbereichs zwischen 2 und 8 liegt, und/oder
   b) **dass** die Beschichtungsbahn (13, 15) in Abhängigkeit von der Abweichung zwischen den Referenzwerten und den Messwerten entlang den einzelnen Rändern angepasst wird mittels

   b1) eines Polynoms n-ter Ordnung mit n von 1-6,
   b2) eines kubischen Splines,
   b3) eines quintischen Splines,
   b4) einer kubischen Bezier-Kurve, oder
   b5) einer quintischen Bezier-Kurve.

9. Beschichtungsverfahren nach einem der vorhergehenden Ansprüche, **dadurch gekennzeichnet,**

   a) **dass** die Referenzwerte der Randpunktpositionen anhand eines CAD-Modells des Bauteils (4) ermittelt werden, oder
   b) **dass** die Referenzwerte der Randpunktpositionen durch eine Messung an einem Referenzbauteil gemessen werden.

10. Beschichtungsverfahren nach einem der vorhergehenden Ansprüche, **dadurch gekennzeichnet,**

   a) **dass** der berandete Oberflächenbereich auf dem zu beschichtenden Bauteil (4) von zwei Beschichtungsrobotern vermessen und beschichtet wird, wobei die beiden Beschichtungsroboter (1) auf gegenüberliegenden Seiten des Oberflächenbereichs angeordnet sind,
   b) **dass** der Oberflächenbereich in zwei Teilbereiche unterteilt ist, die unmittelbar aneinander angrenzen,
   c) **dass** der erste Beschichtungsroboter (1) mit seinem Messsystem (5) den gesamten Oberflächenbereich oder einen der Teilbereiche räumlich vermisst,
   d) **dass** die Bewegungsbahn in Abhängigkeit von der räumlichen Vermessung durch den ersten Beschichtungsroboter (1) angepasst wird,
   e) **dass** der erste Beschichtungsroboter (1) den ersten Teilbereich mit dem Beschichtungsmittel beschichtet,
   f) **dass** der zweite Beschichtungsroboter (1) den zweiten Teilbereich räumlich vermisst, inklusive der abgrenzenden Applikationsbahn zwischen den beiden Teilbereichen, die von dem ersten Beschichtungsroboter appliziert wird.
   g) **dass** die Bewegungsbahn in Abhängigkeit von der räumlichen Vermessung durch den zweiten Beschichtungsroboter (1) angepasst wird, und
   h) **dass** der zweite Beschichtungsroboter (1) den zweiten Teilbereich mit dem Beschichtungsmittel beschichtet.

11. Beschichtungsverfahren nach Anspruch 10, **dadurch gekennzeichnet, dass** wenigstens eine Begrenzung des zweiten Teilbereichs durch den äußeren Rand einer Lackierbahn (15) definiert ist.

**12.** Beschichtungsverfahren nach einem der vorhergehenden Ansprüche, **dadurch gekennzeichnet, dass** die Beschichtungsbahn (13, 15) so angepasst wird, dass folgende Größen innerhalb vorgegebener Toleranzen liegen:

a) Position des Bauteils (4),
b) Form des Bauteils (4),
c) statische Positionierungsungenauigkeit des Beschichtungsroboters (1),
d) dynamische Positionierungsungenauigkeit des Beschichtungsroboters (1),
e) temperaturbedingte Positionierungsungenauigkeit des Beschichtungsroboters (1).

**13.** Beschichtungsanlage zur Beschichtung eines Bauteils (4) mit einem Beschichtungsmittel, mit

a) einem mehrachsigen Beschichtungsroboter (1),
b) einem Applikationsgerät (3), das von dem Beschichtungsroboter (1) entlang einer vorgegebenen Beschichtungsbahn (13, 15) über die Oberfläche des zu beschichtenden Bauteils (4) bewegt wird,
c) einem Messsystem (5) zur räumlichen Vermessung des zu beschichtenden Bauteils (4),
d) einer Steuereinheit (7)

d1) zur Ansteuerung des Applikationsgeräts (3), und
d2) zur Ansteuerung des Beschichtungsroboters (1) entsprechend der vorgegebenen Beschichtungsbahn (13, 15), so dass das Applikationsgerät (3) die vorgegebene Beschichtungsbahn (13, 15) abfährt und das Bauteil (4) auf der Beschichtungsbahn (13, 15) beschichtet, und
d3) zur Abfrage des Messsystems (5) zur Ermittlung der räumlichen Position des zu beschichtenden Bauteils (4),

**dadurch gekennzeichnet,**
e) **dass** die Steuereinheit (7) den Beschichtungsroboter (1) und das Applikationsgerät (3) so ansteuert und das Messsystem (5) so abfragt, dass die Beschichtungsanlage das Beschichtungsverfahren nach einem der vorhergehenden Ansprüche ausführt.

**14.** Beschichtungsanlage nach Anspruch 13, **dadurch gekennzeichnet, dass** das Messsystem (5) an dem Beschichtungsroboter (1) montiert ist und von dem Beschichtungsroboter (1) über die Oberfläche des zu beschichtenden Bauteils (4) bewegt wird.

**15.** Beschichtungsanlage nach Anspruch 13 oder 14, **dadurch gekennzeichnet,**

a) **dass** das Messsystem (5) folgendes Aufweist:

a1) einen Lichtschnittsensor und/oder
a2) eine Kamera,

b) **dass** das Applikationsgerät (3)

b1) ein Zerstäuber ist, oder
b2) ein im Wesentlichen oversprayfreies Applikationsgerät (3) ist, das im Gegensatz zu einem Zerstäuber das Beschichtungsmittel nicht zerstäubt, sondern einen räumlich eng begrenzten Beschichtungsmittelstrahl, und/oder

c) **dass** das Beschichtungsmittel ein Lack ist.

**16.** Beschichtungsanlage nach einem der Ansprüche 13 bis 15, **dadurch gekennzeichnet, *dass*** zur Vermessung und Beschichtung des berandeten Oberflächenbereichs auf dem zu beschichtenden Bauteil (4) zwei Beschichtungsroboter vorgesehen sind, wobei die beiden Beschichtungsroboter (1) auf gegenüberliegenden Seiten des Oberflächenbereichs angeordnet sind.

**Claims**

**1.** Coating method for coating a component (4) with a coating agent, having the following steps:

a) presetting at least one coating path (13, 15) of a coating robot (1) for moving a paint impact point of an application device (3) along the preset at least one coating path (13, 15) over the surface of the component (4) to be coated, the at least one coating path (13, 15) running through a surface region of the component (4) to be coated which is bounded by edges,

b) presetting reference values of the spatial edge point positions and/or the edge point orientations for edge points on the edges of the surface region,

c) spatial measurement of position, orientation and/or shape of the component (4) to be coated or a part of the component (4) to be coated by means of a measuring system (5), whereby measured values of the edge point positions and/or the edge point orientations of the edge points on the edges of the surface region are measured,

d) determining the deviation between the measured values of the edge point positions and/or the edge point orientations on the one hand and the reference values of the edge point positions and/or the edge point orientations on the other hand, and

e) adjusting the coating path (13, 15) as a function of the deviation between the reference values of the edge point positions and the measured values of the edge point positions,

f) moving an application device (3) along the at least one adapted coating path (13, 15) over the surface of the component (4) to be coated, and

g) applying the coating agent by the application device (3) to the surface of the component (4) to be coated during the movement of the application device (3) along the at least one adapted coating path (13, 15).

2. Coating method according to claim 1, **characterized in that** the step c) for spatially measuring position, orientation and/or shape of the component (4) to be coated or a part of the component (4) to be coated further comprises the following steps:

   c1) Specifying a measuring path for moving the measuring system (5) over the surface of the component (4) to be coated, the measuring path corresponding essentially to the coating path (13, 15),

   c2) moving a measuring system (5) along the predetermined measuring path, the paint impact point of the application device (3) following the predetermined measuring path, and

   c3) spatial measurement of the component (4) to be coated by the measurement system (5) during the measurement movement along the measurement path.

3. Coating method according to claim 2, **characterized in that** the deviations between the spatial position of the paint impact point during the measuring movement along the measuring path on the one hand and the spatial position of the paint impact point during the application movement along the coating path (13, 15) on the other hand are smaller than 40 mm, 30 mm, 20 mm, 10 mm, 5 mm, 2 mm or 1 mm.

4. Coating method according to claim 2 or 3, **characterized in that** the application device (3) has substantially the same spatial orientation during the measuring movement as during the application movement.

5. Coating method according to claim 4, **characterized in**

   a) **that** the angular deviations between the orientation of the application device (3) during the measuring movement on the one hand and the orientation of the application device (3) during the application movement on the other hand are smaller than 45°, 30°, 20°, 10°, 5°, 2° or 1°, and/or

   b) **that** the angular deviations between the orientation of the individual robot axes during the measuring movement on the one hand and the orientation of the individual robot axes during the application movement on the other hand are smaller than 20°, 10° or 5°.

6. Coating method according to one of the preceding claims, **characterized in**

   a) **that** the application movement along the at least one coating path (13, 15) takes place with a specific movement dynamic,

   b) **that** the measuring movement along the coating path (13, 15) takes place with a specific movement dynamic, and

   c) **that** the measuring movement takes place with essentially the same movement dynamics as the application movement, namely with regard to the path speed of the paint impact point of the application device (3) and/or with regard to the path acceleration of the paint impact point of the application device (3).

7. Coating method according to claim 6, **characterized in**

a) **that** the deviations between the path speed of the paint impact point during the measuring movement on the one hand and the path speed of the paint impact point during the application movement on the other hand are smaller than

    a1) 60%, 50%, 40%, 30%, 20%, 10% or 5%, and/or
    a2) 500mm/s, 400mm/s, 300mm/s,

b) **that** the deviations between the path acceleration of the paint impact point during the measuring movement on the one hand and the path acceleration of the paint impact point during the application movement on the other hand are smaller than 10% or 5%.

8. Coating method according to one of the preceding claims, **characterized in**

    a) **that** the number of measured edges of the surface region is between 2 and 8, and/or
    b) **that** the coating path (13, 15) is adjusted as a function of the deviation between the reference values and the measured values along the individual edges by means of

        b1) an $n^{th}$ order polynomial with n of 1-6,
        b2) a cubic spline,
        b3) a quintic spline,
        b4) a cubic Bezier curve, or
        b5) a quintic Bezier curve.

9. Coating method according to any one of the preceding claims, **characterized in**

    a) **that** the reference values of the edge point positions are determined on the basis of a CAD model of the component (4), or
    b) **that** the reference values of the edge point positions are measured by a measurement on a reference component.

10. Coating method according to any one of the preceding claims, **characterized in**

    a) **that** the edged surface region on the component (4) to be coated is measured and coated by two coating robots, the two coating robots (1) being arranged on opposite sides of the surface region,
    b) **that** the surface region is divided into two sub-regions which are directly adjacent to one another,
    c) **that** the first coating robot (1) spatially measures the entire surface region or one of the sub-regions with its measuring system (5),
    d) **that** the movement path is adapted as a function of the spatial measurement by the first coating robot (1),
    e) **that** the first coating robot (1) coats the first sub-region with the coating agent,
    f) **that** the second coating robot (1) spatially measures the second sub-region, including the delimiting application path between the two sub-regions, which is applied by the first coating robot.
    g) **that** the path of movement is adapted in dependence on the spatial measurement by the second coating robot (1), and
    h) **that** the second coating robot (1) coats the second sub-region with the coating agent.

11. Coating method according to claim 10, **characterized in that** at least one boundary of the second sub-region is defined by the outer edge of a coating path (15).

12. Coating method according to one of the preceding claims, **characterized in that** the coating path (13, 15) is adapted so that the following variables lie within predetermined tolerances:

    a) Position of the component (4),
    b) shape of the component (4),
    c) static positioning inaccuracy of the coating robot (1),
    d) dynamic positioning inaccuracy of the coating robot (1),
    e) temperature-related positioning inaccuracy of the coating robot (1).

13. Coating installation for coating a component (4) with a coating agent, having

a) a multi-axis coating robot (1),

b) an application device (3) which is moved by the coating robot (1) along a predetermined coating path (13, 15) over the surface of the component (4) to be coated,

c) a measuring system (5) for spatial measurement of the component (4) to be coated,

d) a control unit (7)

d1) for controlling the application device (3), and

d2) for controlling the coating robot (1) according to the predetermined coating path (13, 15) so that the application device (3) moves along the predetermined coating path (13, 15) and coats the component (4) on the coating path (13, 15), and

d3) for interrogating the measuring system (5) to determine the spatial position of the component (4) to be coated,

**characterized in**

e) **that** the control unit (7) controls the coating robot (1) and the application device (3) and interrogates the measuring system (5) in such a way that the coating installation carries out the coating method according to one of the preceding claims.

14. Coating installation according to claim 13, **characterized in that** the measuring system (5) is mounted on the coating robot (1) and is moved by the coating robot (1) over the surface of the component (4) to be coated.

15. Coating installation according to claim 13 or 14, **characterized in,**

a) **that** the measuring system (5) has the following:

a1) a light section sensor and/or

a2) a camera,

b) **that** the application device (3)

b1) is an atomizer, or

b2) is a substantially overspray-free application device (3) which, in contrast to an atomizer, does not atomize the coating agent but a spatially narrowly limited coating agent jet, and/or

c) **that** the coating agent is a paint.

16. Coating installation according to one of the claims 13 to 15, **characterized in that** two coating robots are provided for measuring and coating the edged surface region on the component (4) to be coated, the two coating robots (1) being arranged on opposite sides of the surface region.

**Revendications**

1. Procédé de revêtement pour le revêtement d'un composant (4) avec un produit de revêtement, avec les étapes suivantes :

a) prédétermination d'au moins une bande de revêtement (13, 15) d'un robot de revêtement (1) pour le déplacement d'un point d'impact de peinture d'un appareil d'application (3) le long du composant à revêtir (4), dans lequel l'au moins une bande de revêtement (13, 15) s'étend à travers une zone superficielle du composant à revêtir (4), qui est délimitée par des bords,

b) prédétermination de valeurs de référence des positions des points de bords et/ou des orientations des points de bords dans l'espace pour les points de bords sur les bords de la zone superficielle,

c) mesure spatiale de la position, de l'orientation et/ou de la forme du composant à revêtir (4) ou d'une partie du composant à revêtir (4) au moyen d'un système de mesure (5), dans lequel les valeurs de mesure des positions de points de bords et/ou des orientations des points de bords sont mesurées sur les bords de la zone superficielle,

d) détermination de l'écart entre les valeurs de mesure des positions de points de bords et/ou des orientations des points de bords d'une part et les valeurs de référence des positions de points de bords et/ou des orientations des points de bords d'autre part et

e) adaptation de la bande de revêtement (13, 15) en fonction de l'écart entre les valeurs de référence des points de bords et les valeurs de mesure des points de bords,

f) déplacement d'un appareil d'application (3) le long de l'au moins une bande de revêtement (13, 15) adaptée sur la surface du composant à revêtir (4) et

g) application du produit de revêtement par l'appareil d'application (3) sur la surface du composant à revêtir (4) pendant le déplacement de l'appareil d'application (3) le long de l'au moins une bande de revêtement (13, 15) adaptée.

2. Procédé de revêtement selon la revendication 1, **caractérisé en ce que** l'étape c) comprend en outre, pour la mesure spatiale de la position, de l'orientation et/ou de la forme du composant à revêtir (4) ou d'une partie du composant à revêtir (4) ; les étapes suivantes :

c1) prédétermination d'une bande de mesure pour le déplacement du système de mesure (5) au-dessus de la surface du composant à revêtir (4), dans lequel bande de mesure correspond globalement à la bande de revêtement (13, 15),

c2) déplacement d'un système de mesure (5) le long de la bande de mesure prédéterminée, dans lequel le point d'impact de la peinture de l'appareil d'application (3) suit la bande de mesure prédéterminée et

c3) mesure spatiale du composant à revêtir (4) par le système de mesure (5) pendant le déplacement de mesure le long de la bande de mesure.

3. Procédé de revêtement selon la revendication 2, **caractérisé en ce que** les écarts entre la position dans l'espace du point d'impact de la peinture lors du déplacement de mesure le long de la bande de mesure d'une part et la position dans l'espace du point d'impact de la peinture lors du déplacement d'application le long de la bande de revêtement (13, 15) d'autre part sont inférieures à 40 mm, 30 mm, 20 mm, 10 mm, 5 mm, 2 mm ou 1 mm.

4. Procédé de revêtement selon la revendication 2 ou 3, **caractérisé en ce que** l'appareil d'application (3) présente, lors du déplacement de mesure, globalement la même orientation spatiale que lors du déplacement d'application.

5. Procédé de revêtement selon la revendication 4, **caractérisé en ce que**

a) les écarts angulaires entre l'orientation de l'appareil d'application (3) lors du déplacement de mesure d'une part et l'orientation de l'appareil d'application (3) lors du déplacement d'application d'autre part sont inférieurs à 45°, 30°, 20°, 10°, 5°, 2° ou 1° et/ou

b) les écarts angulaires entre l'orientation des différents axes du robot lors du déplacement de mesure d'une part et l'orientation des différents axes du robot lors du déplacement d'application d'autre part sont inférieurs à 20°, 10° ou 5°.

6. Procédé de revêtement selon l'une des revendications précédentes, **caractérisé en ce que**

a) le déplacement d'application a lieu le long de l'au moins une bande de revêtement (13, 15) avec une dynamique de déplacement déterminée,

b) le déplacement de mesure a lieu le long de la bande de revêtement (13, 15) avec une dynamique de déplacement déterminée,

c) le déplacement de mesure a lieu globalement avec la même dynamique de déplacement que le déplacement d'application, notamment en ce qui concerne la vitesse de bande du point d'impact de la peinture de l'appareil d'application (3) et/ou en ce qui concernant l'accélération de bande du point d'impact de la peinture de l'appareil d'application (3).

7. Procédé de revêtement selon la revendication 6, **caractérisé en ce que**

a) les écarts entre la vitesse du point d'impact de la peinture lors du déplacement de mesure d'une part et la vitesse de bande du point d'impact de la peinture lors du déplacement d'application d'autre part sont inférieurs à

a1) 60 %, 50 %, 40 %, 30 %, 20 %, 10 % ou 5 % et/ou
a2) 500 mm/s, 400 mm/s, 300 mm/s,

b) les écarts entre l'accélération de bande du point d'impact de la peinture lors du déplacement de mesure d'une part et l'accélération de bande du point d'impact de la peinture lors du déplacement d'application d'autre part sont inférieurs à 10 % ou 5 %.

8. Procédé de revêtement selon l'une des revendications précédentes, **caractérisé en ce que**

a) le nombre des bords mesurés de la zone superficielle est entre 2 et 8, et/ou
b) la bande de revêtement (13, 15) est adaptée en fonction de l'écart entre les valeurs de référence et les valeurs de mesure le long des différents bords, au moyen

b1) d'un polynôme du n-ième ordre, avec n de 1 à 6,
b2) d'une spline cubique,
b3) d'une spline quintique,
b4) d'une courbe de Bézier cubique ou
b5) d'une courbe de Bézier quintique.

9. Procédé de revêtement selon l'une des revendications précédentes, **caractérisé en ce que**

a) les valeurs de référence des positions des points de bords sont déterminées à l'aide d'un modèle CAO du composant (4) ou
b) les valeurs de référence des positions des points de bords sont mesurées par une mesure sur un composant de référence.

10. Procédé de revêtement selon l'une des revendications précédentes, **caractérisé en ce que**

a) la zone superficielle délimitée sur le composant à revêtir (4) est mesurée et revêtue par deux robots de revêtement, dans lequel les deux robots de revêtement (1) sont disposés sur des côtés opposés de la zone superficielle,
b) la zone superficielle est divisée en deux zones partielles qui sont directement adjacentes entre elles,
c) le premier robot de revêtement (1) mesure dans l'espace avec son système de mesure (5) la totalité de la zone superficielle ou une des zones partielles,
d) la bande de déplacement est adaptée en fonction de la mesure spatiale par le premier robot de revêtement (1),
e) le premier robot de revêtement (1) recouvre la première zone partielle avec le produit de revêtement,
f) le deuxième robot de revêtement (1) mesure dans l'espace la deuxième zone partielle, y compris la bande d'application adjacente entre les deux zones partielles, qui est appliquée par le premier robot de revêtement,
g) la bande de déplacement est adaptée en fonction de la mesure spatiale par le deuxième robot de revêtement (1) et
h) le deuxième robot de revêtement (1) recouvre la deuxième zone partielle avec le produit de revêtement.

11. Procédé de revêtement selon la revendication 10, **caractérisé en ce qu'**au moins une limitation de la deuxième zone partielle est définie par le bord externe d'une bande de peinture (15).

12. Procédé de revêtement selon l'une des revendications précédentes, **caractérisé en ce que** la bande de revêtement (13, 15) est adaptée de façon à ce que les grandeurs suivantes se trouvent à l'intérieur de tolérances prédéterminées :

a) position du composant (4),
b) forme du composant (4),
c) précision de positionnement statique du robot de revêtement (1),
d) précision de positionnement dynamique du robot de revêtement (1),
e) précision de positionnement en fonction de la température du robot de revêtement (1).

13. Installation de revêtement pour le revêtement d'un composant (4) avec un produit de revêtement, avec

a) un robot de revêtement multiaxial (1),
b) un appareil d'application (3) qui est déplacé par le robot de revêtement (1) le long d'une bande de revêtement (13, 15) prédéterminée au-dessus de la surface du composant à revêtir (4),
c) un système de mesure (5) pour la mesure dans l'espace du composant à revêtir (4),
d) une unité de commande (7)

d1) pour le contrôle de l'appareil d'application (3) et

d2) pour le contrôle du robot de revêtement (1) en fonction de la bande de revêtement (13, 15) prédéterminée, de façon à ce que l'appareil d'application (3) parcoure la bande de revêtement (13, 15) prédéterminée et recouvre le composant (4) sur la bande de revêtement (13, 15) et

d3) pour l'interrogation du système de mesure (5) afin de déterminer la position dans l'espace du composant à revêtir (4),

**caractérisé en ce que**

e) l'unité de commande (7) contrôle le robot de revêtement (1) et l'appareil d'application (3) et interroge le système de mesure (5) de façon à ce que l'installation de revêtement exécute le procédé de revêtement selon l'une des revendications précédentes.

**14.** Installation de revêtement selon la revendication 13, **caractérisé en ce que** le système de mesure (5) est monté sur le robot de revêtement (1) et est déplacé par le robot de revêtement (1) au-dessus de la surface du composant à revêtir (4).

**15.** Installation de revêtement selon la revendication 13 ou 14, **caractérisé en ce que**

a) le système de mesure (5) comprend ce qui suit :

a1) un capteur de profil et/ou
a2) une caméra,

b) l'appareil d'application (3) est

b1) un pulvérisateur ou
b2) un appareil d'application (3) globalement sans pulvérisation excessive qui, au contraire d'un pulvérisateur, ne pulvérise pas le produit d'application mais émet un jet de produit de revêtement étroitement délimité et/ou

c) le produit de revêtement est une peinture.

**16.** Installation de revêtement selon l'une des revendications 13 à 15, **caractérisé en ce que**, pour la mesure et le revêtement de la zone superficielle délimitée sur le composant à revêtir (4), deux robots de revêtement sont prévus, dans lequel les deux robots de revêtement (1) sont disposés sur des côtés opposés de la zone superficielle.

Start

S1 — Vorgabe einer Beschichtungsbahn über die Oberfläche des zu beschichtenden Bauteils

S2 — Vorgabe einer Bewegungsdynamik für das Abfahren der Beschichtungsbahn

S3 — Abfahren einer Messbahn ähnlich der vorgegebenen Beschichtungsbahn mit einer Bewegungsdynamik ähnlich der vorgegebenen Bewegungsdynamik durch den Lackierroboter und dabei räumliches Vermessen des zu beschichtenden Bauteils durch das Messgerät an dem Lackierroboter

S4 — Anpassen der Beschichtungsbahn in Abhängigkeit von der räumlichen Vermessung des zu beschichtenden Bauteils zur Kompensation von Toleranzen

S5 — Abfahren der angepassten Beschichtungsbahn und dabei Applikation des Beschichtungsmittels durch das Applikationsgerät

Ende

# Fig. 1

3

5

1

4

Fig. 2A

Robotersteuerung

Messtechnik

7

2

Roboterflansch

Sensor

5

3

Applikator

00

6

Fig. 2B

S1 — Umlaufende Konturmessung der Applikationsfläche

S2 — Vergleich mit der Referenzmessung

S3 — Berechnen der Messdifferenzen

S4 — Senden der Messergebnisse an die Robotersteuerung

S5 — Neuberechnung der Applikationsprogramme auf Basis der Messergebnisse

S6 — Applikation

Fig. 3

Fig. 4A

Fig. 4B

Fig. 5

S1 — Umlaufende Konturmessung der ersten Applikationsfläche

S2 — Vergleich mit der Referenzmessung

S3 — Berechnen der Messdifferenzen

S4 — Senden der Messergebnisse an die Robotersteuerung

S5 — Neuberechnung der Applikationsprogramme auf Basis der Messergebnisse

S6 — Applikation der ersten Applikationsfläche, beginnend mit der Grenzbahn

S7 — Umlaufende Konturmessung der zweiten Applikationsfläche ohne Grenzkontur

S8 — Messen der Grenzkontur

S9 — Vergleich mit der Referenzmessung

S10 — Berechnen der Messdifferenzen

S11 — Senden der Messergebnisse an die Robotersteuerung

S12 — Neuberechnung der Applikationsprogramme auf Basis der Messergebnisse

S13 — Applikation der zweiten Applikationsfläche

Fig. 6A

Fig. 6B

Fig. 6C

Fig. 6D

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1184139 A2
- US 20150328773 A1
- WO 2014090323 A1
- CN 108297097 A
- DE 102016014944 A1
- DE 9001451 U1
- DE 102013002433 A1
- DE 102013002413 A1
- DE 102013002412 A1
- DE 102013002411 A1

**In der Beschreibung aufgeführte Nicht-Patentliteratur**

- **VOGEL, W.** Eine interaktive räumliche Benutzerschnittstelle für die Programmierung von Industrierobotern. *Forschungsberichte IWB,* 2009, vol. 228
- Dissertation Technische. Universität München, 2008
- *CAD-Systeme bilden Basis für Offline-Programmierung,* 12. April 2014, https://www.computer-woche.de/a/cad-systeme-bilden-basis-fuer-offlineprogrammierung/1157492
- **GRUHLER, GERHARD.** ISW Forschung und Praxis - Sensorgeführte Programmierung bahngesteuerter Industrieroboter. Springer-Verlag Berlin Heidelberg GmbH, 1987, vol. 67